# EUROPEAN PATENT SPECIFICATION

(11) **EP 3 169 574 B1**
(45) Date of publication and mention of the grant of the patent: **07.06.2023**
(21) Application number: 15818708.8
(22) Date of filing: 09.03.2015
(51) Int. Cl.: B61L 27/04, B61B 13/12, B61L 25/02, B65G 43/00

(54) **CONTROL SYSTEM FOR AN IMPROVED RAIL TRANSPORT SYSTEM FOR CONVEYING BULK MATERIALS**
STEUERUNGSSYSTEM FÜR EIN VERBESSERTES SCHIENENTRANSPORTSYSTEM ZUM FÖRDERN VON SCHÜTTGUT
SYSTÈME DE COMMANDE POUR UN SYSTÈME DE TRANSPORT FERROVIAIRE AMÉLIORÉ POUR LE TRANSPORT DE MATÉRIAUX EN VRAC

(30) Priority: 08.07.2014 US 201462021905 P
(43) Date of publication of application: 24.05.2017
(73) Proprietor: Rail-Veyor Technologies Global Inc., Lively, Ontario P3Y 1L7 (CA)
(72) Inventor: FISK, James Everrett, Antioch, Illinois 60002 (US); FANTIN, Patrick Walter Joseph, Hanmer, Ontario P3P 1A5 (CA); MCCALL, William John, Garson, Ontario P3L 1L6 (CA); NIEMEYER, David Wilhelm, Val Caron, Ontario P3N 1H9 (CA); REAY, Curtis Ron, Hanmer, Ontario P3P 1S2 (CA); ZANETTI, Eric Benjamin Alexander, Sudbury, Ontario P3A 2B7 (CA); HELLBERG, Esko Johannes, Lively, Ontario P3Y 1M8 (CA); CAPERS, Joseph Gerald, Mars Hill, North Carolina 28754 (US)
(74) Representative: Brown, Alexander Edward
(86) International application number: PCT/CA2015/050175
(87) International publication number: WO 2016/004515

(56) References cited:
- JP-A- 2011 218 967
- US-A- 5 777 547
- US-A1- 2003 226 470
- US-A1- 2006 162 608
- US-A1- 2008 154 451
- US-A1- 2010 262 321
- US-A1- 2011 022 253
- US-A1- 2012 138 752

## Description

### FIELD OF THE INVENTION

The present invention generally relates to determining train position, and more particularly, to determining train position in automated train systems with no internal drive for conveying bulk materials.

### BACKGROUND

Methods and arrangements for moving bulk materials in conventional trains, trucks, conveyor belts, aerial tramways or as a slurry in a pipeline are well known and are typically used in various industries because of site-specific needs or experience. In the minerals and aggregate industries, for example, bulk materials are moved from mining or extraction sites to a process facility for upgrading or sizing. Trucks had been the system of choice for many years for moving bulk materials. Trucks were enlarged for off-road vehicles because of their efficient transport of bulk materials and increased capacity. These vehicles, however, are limited to site specific applications and are provided at a high capital cost. Major off-road trucks have evolved that require very wide roadways for passing each other, are not energy efficient per ton-mile of material transported, have limited hill climbing ability, and are dangerous because of potential of operator error as well as being environmentally unpleasant neighbors.

Trains have been used for many years for bulk material transport in hopper cars. Because of low friction, due to free rolling iron or steel wheels on steel tracks trains are very efficient users of energy but are limited in capacity relative to the drivers or locomotives required. Large tonnage long trains use multiple drivers that are heavy units, which dictate the weight of rail and ballast requirements. All railroads must be designed for the weight of the drivers or locomotives including fuel, not the combination of car plus loads, which are significantly less. The drivers need to be of sufficient weight so that the rotary drive tire makes contact with the stationary rail and must have sufficient friction to produce forward or reverse movement of what will include heavily loaded cars. The level of inclination that conventional railroad systems are capable of traversing is limited to the friction between the weighted drive wheels and track. Rail cars are individual units that each has to be loaded in a batch process, one car at a time. Bulk materials can be unloaded from hopper cars by opening bottom dump hatches or can be individually rotated to dump out of the top. Spotting cars for both loading and unloading is time consuming and labor intensive.

Although moving from one location to another may be cost effective, the added cost of batch loading and unloading stages in shorter distance transports reduces the rail transport cost effectiveness. With normal single dual track train systems only one train can be used on a system at a time.

Conveyor belts have been used for many years to move bulk materials. A wide variety of conveyor belt systems exist that can move practically every conceivable bulk material. Very long distance single belt runs are very capital cost intensive and are subject to catastrophic failure when a belt tears or rips, typically shutting down the entire system and dumping the carried load, requiring cleanup. Conveyor belts are relatively energy efficient but can require high maintenance because of an inherent problem of multiple idler bearings requiring constant checking and replacement. Short distance conveyor belts are commonly used in dry or clamp transport of almost all types of materials. Because conveyor belts are very flexible and desirably operated over fairly flat terrain, they are not efficient at transporting moderately high solids slurry where water and fine particles can accumulate in low spots and spill over the side creating wet spilled slurry handling problems.

Some bulk materials can be transported in pipelines when mixed with water to form a slurry that is pushed or pulled with a motor driven pump impeller in an airless or flooded environment. The size of the individual particles that are present in the bulk materials dictates the transport speed necessary to maintain movement. For example, if large particles are present then the velocity must be high enough to maintain movement by saltation or skidding along the bottom of the pipe of the very largest particles. Because pipelines operate in a dynamic environment, friction is created with the stationary pipe wall by a moving fluid and solid mass. The higher the speed of the moving mass the higher the friction loss at the wall surface requiring increased energy to compensate. Depending on the application, the bulk material has to be diluted with water initially to facilitate transport and dewatering at the discharge end.

Light rail, narrow gage railroads for transporting bulk material from mines and the like is known as described by way of example with reference to U.S. Pat. No. 3,332,535 to Hubert et al. wherein a light rail train made up of several cars is propelled by drive wheels and electric motors combinations, dumping over an outside loop. By way of further example, U.S. Pat. No. 3,752,334 to Robinson, Jr. et al. discloses a similar narrow gage railroad wherein the cars are driven by an electric motor and drive wheels. U.S. Pat. No. 3,039,402 to Richardson describes a method of moving railroad cars using a stationary friction drive tire.

While the above described transport systems and methods have specific advantages over conventional systems, each is highly dependent upon a specific application. It has become apparent that increases in labor, energy and material costs as well as environmental concerns, that alternate transport methods need to be applied that are energy and labor efficient, quiet, non-polluting, and esthetically unobtrusive. US Patent Publications US 2003/0226470 to Dibble et al. for "Rail Transport System for Bulk Materials", US 2006/0162608 to Dibble for "Light Rail Transport System for Bulk Materials", and U.S. Pat. No. 8,140,202 to Dibble describe a light rail train utilizing an open semi-circular trough train with drive stations. Such a light rail system offers an innovative alternative to the above mentioned material transport systems and provides for the transport of bulk materials using a plurality of connected cars open at each end except for the first and last cars, which have end plates. The train forms a long open trough and has a flexible flap attached to each car and overlapping the car in front to prevent spillage during movement. The lead car has four wheels and tapered side drive plates in the front of the car to facilitate entry into the drive stations. The cars that follow have two wheels with a clevis hitch connecting the front to the rear of the car immediately forward. Movement of the train is provided by a series of appropriately placed drive stations having drive motors on either side of the track which are AC electric motors with drive means such as tires to provide frictional contact with the side drive plates. At each drive station, each drive motor is connected to an AC inverter and controller for drive control, with both voltage and frequency being modified as needed. The electric motors each turn a tire in a horizontal plane that physically contacts two parallel side drive plates external of the wheels of each car. Pressure on the side drive plates by these drive tires converts the rotary motion of the tires into horizontal thrust. The wheels on the cars are spaced to allow operation in an inverted position by use of a double set of rails to allow the cars to hang upside down for unloading. By rotating this double track system the unit train can be returned to it normal operating condition. Such a system is well known and commercially referred to as the Rail-Veyor^{™} material handling system.

Flanged wheels may be symmetrical to the side drive plates allowing operation in an inverted position which, when four rails are used to encapsulate the wheel outside loop discharge of the bulk material is possible. By using elevated rails, the train can operate in the inverted position as easily as in the conventional manner.

Yet further, drives for such light rail systems have been developed as described in U.S. Pat. No. 5,067,413 to Kiuchi et al. describing a device for conveying travelable bodies which are provided no driving source, on a fixed path. A plurality of travelable bodies travels on the fixed path while aligned substantially in close contact with each other. Traveling power is transmitted to one of a plurality of travelable bodies which is positioned on at least one end of the alignment. The traveling power drives the travelable body with frictional force while pressing one side surface of the travelable body, and is transmitted to the travelable body while backing up the other side surface of the travelable body. A device to transmit traveling power is arranged on only a part of the fixed path.

It is known to sense a train's position by using an arrangement of proximity sensors located so as to sense both a train's side plate and each wheel of the train as it approaches and passes a drive station, as disclosed in U.S. Patent No. 8,140,202 for "Method of Controlling a Rail Transport System for Conveying Bulk Materials".

Although the train position determination systems and methods employed therein have been found effective, a need exists for a further optimized or improved system.

### SUMMARY OF THE INVENTION

In at least some embodiments, the present invention provides for systems and methods for sensing a train position of a train with no internal drive operating in an automated train system. According to one embodiment of the present invention that is not recited in the claims, a train system comprises a track extending in a travel direction, a plurality of cars riding on the track and connected to form a train, a position sensing unit, and a programmable logic controller (PLC) in signal communication with the position sensing unit and configured to determine a train position based on inputs therefrom.

In one embodiment of a position sensing unit that is not recited in the claims, each of the plurality of cars has a substantially identical car length in the travel direction and there are a plurality of car detection elements on the plurality of cars. Each of the plurality of car detection elements has a substantially identical detection element length in the travel direction, the detection element length being less than the car length.

The position sensing unit may include a first position sensor arranged along the track responsive to the presence and/or absence of each of the plurality of car detection elements and a second position sensor arranged along the track responsive to the presence and/or absence of each of the plurality of car detection elements and separated from the first position sensor in the travel direction by a first sensor spacing, the first sensor spacing being less than the detection element length.

According to one embodiment of alternate position sensing unit that is not recited in the claims, the cars are connected in a car order and a plurality of data tags are arranged on the plurality of cars, each of the plurality of data tags storing a unique identifier. The position sensing unit includes a data tag reader arranged along the track and operable to detect each of the plurality of data tags in sequence and read the unique identifiers therefrom. The programmable logic controller stores a list of the unique identifiers corresponding to the car order and is configured to determine a train position based on inputs from the position sensing unit and the stored list.

In one embodiment, the present invention provides for a rail transport system for conveying bulk materials, including:
a plurality of cars adapted to form at least two separate trains, at least one car having a pair of side drive plates and is adapted for carrying the bulk materials, and a car detection element associated to at least one of the cars,
a drive station for frictionally contacting the side drive plates of at least one of the cars for imparting a driven movement to each contacted car, and
a control system according to any one of claims 1 to 4.

In a further embodiment of the rail transport system or systems outlined above, the drive station includes a drive unit and a drive tire arrangement for frictionally contacting the side drive plates of at least one of the cars, and wherein the drive unit is adapted to control the drive tire arrangement in response to the determined status of one of the cars.

In a further embodiment of the rail transport system or systems outlined above, the drive unit is adapted to control the drive tire arrangement to increase driven movement from the drive tire arrangement to a car engaged thereto in response to the determined status information.

In a further embodiment of the rail transport system or systems outlined above, the drive unit is adapted to control the drive tire arrangement to decrease driven movement from the drive tire arrangement to a car engaged thereto in response to the determined status information.

In a further embodiment of the rail transport system or systems outlined above, the car detection element has an effective area such that only one of the sensors detects the car detection element at one time.

In a further embodiment of the rail transport system or systems outlined above, as each car passes near the drive station, each sensor sequentially detects the car detection element of the car.

In a further embodiment of the rail transport system or systems outlined above, the car detection element is a metal member elongated in a travel direction of the car.

In another embodiment, the present invention provides for a control system for a rail transport system for conveying bulk materials, wherein the rail transport system includes a plurality of cars adapted to form at least two separate trains, and wherein at least one car of each train has a pair of side drive plates and is adapted for carrying the bulk materials, the rail transport system further including at least one drive station for frictionally contacting the side drive plates for imparting a driven movement to each train, the control system comprising:
a multiple sensor arrangement comprising at least three sensors with a known pre-determined spacing between each sensor permitting sequential detection of a car detection element of at least one car of each of the trains as the car passes by, wherein the pre-determined spacing between a first sensor and a second sensor of the multiple sensor arrangement is less than the pre-determined spacing between the second sensor and a third sensor of the multiple sensor arrangement, for sensing a car detection element of at least one car of each of the trains,
wherein the multiple sensor arrangement is adapted to determine status information associated with the at least one car wherein the status information is at least one of the speed of the car, speed of the train associated with the car, acceleration rate of the car, acceleration rate of the train associated with the car, direction of movement of the car, derailment of the car, location of the car, locations of the train, or derailment of the train associated with the car.

The sensor arrangement may be operatively coupled to the drive station.

As a car passes near the drive station, the sensor arrangement may detect the corresponding car detection element of the car.

The sensor arrangement may be located separate and apart from the drive station.

In a further embodiment of the control system or systems outlined above, the sensors are a proximity sensor, a magnetic proximity sensor, or an ultra-sonic sensor.

In a further embodiment of the control system or systems outlined above, the multiple sensor arrangement is a three sensor arrangement.

In a further embodiment of the control system or systems outlined above, the three sensor arrangement can be implemented to sequentially detect the car detection element of at least one car.

In yet another embodiment that is not recited in the claims, the present invention provides for a method for controlling a rail transport system for conveying bulk materials, wherein the rail transport system includes a train having a pair of side drive plates and is adapted for carrying the bulk materials, wherein the rail transport system further includes at least two drive stations for frictionally contacting the side drive plates for imparting a driven movement to the train, the method comprising:
imparting a driven movement to the train at a select speed and acceleration at the first drive station,
determining the position of the train relative to the second drive station, and
when the train is determined to be at a select position relative to the second drive station, initiating the second drive station such that driven movement is imparted to the train at the second drive station to maintain substantially the same speed of the train as when the train was at the first drive station.

In a further embodiment of the method or methods outlined above that is not recited in the claims, the method(s) further include the step of
stopping operation of the second drive station if the second drive station is not at a condition for imparting to the train driven movement to maintain substantially the same speed of the train as when the train was at the first drive station.

In a further embodiment of the method or methods outlined above that is not recited in the claims, the at least two drive stations are positioned apart a greater distance than the length of the train.

In yet another embodiment that is not recited in the claims, the present invention provides for a method for controlling a rail transport system for conveying bulk materials, wherein the rail transport system includes a train having a pair of side drive plates and is adapted for carrying the bulk materials, wherein the rail transport system further includes a drive station for frictionally contacting the side drive plates for imparting a driven movement to the train, the method comprising:
determining the position of the train relative to the drive station, and
when the train is determined to be at a select position relative to the drive station, initiating the drive station to impart driven movement to the train at a desired speed when the train passes therethrough.

In a further embodiment of the method or methods outlined above that is not recited in the claims, the rail transport system further includes a second drive station for frictionally contacting the side drive plates for imparting a driven movement to the train, and wherein the method further comprises:
ensuring that at least one of the cars of the train is in contact with one of the drive stations at all times.

In a further embodiment of the method or methods outlined above that is not recited in the claims, the rail transport system further includes a second drive station for frictionally contacting the side drive plates for imparting a driven movement to the train, and wherein the distance between two drive stations is longer than a length of the train. In a further embodiment of the system or systems outlined above that is not recited in the claims, the system further comprises a plurality of cars adapted to form a second train, each car having a pair of side drive plates and is adapted for carrying the bulk materials.

In yet another embodiment that is not recited in the claims, the present invention provides for a train system comprising:
a track extending in a travel direction;
a plurality of cars situated on the track and connected to form a train;
a plurality of car detection elements on the plurality of cars, each of the plurality of car detection elements having a substantially identical detection element length in the travel direction, the detection element length being less than the car length;
a position sensing unit including:
   a first position sensor arranged along the track responsive to the presence and absence of each of the plurality of car detection elements;
   a second position sensor arranged along the track responsive to the presence and absence of each of the plurality of car detection elements and separated from the first position sensor in the travel direction by a first sensor spacing, the first sensor spacing being less than the detection element length; and
a programmable logic controller (PLC) in signal communication with the position sensing unit and configured to determine a train position based on inputs therefrom.

In a further embodiment of the system or systems outlined above that is not recited in the claims, the position sensing unit further includes a third position sensor arranged along the track responsive to the presence and absence of each of the plurality of car detection elements, separated by the second position sensor in the travel distance by a second sensor spacing and separated from the first position sensor by a third sensor spacing equal to the sum of the first and second sensor spacings, the second sensor spacing being less than the detection element length.

In a further embodiment of the system or systems outlined above that is not recited in the claims, the third sensor spacing is greater than the detection element length.

In a further embodiment of the system or systems outlined above that is not recited in the claims, the first and second sensor spacings are unequal.

In a further embodiment of the system or systems outlined above that is not currently recited in the claims, the third sensor spacing is less than the car length.

In a further embodiment of the system or systems outlined above that is not recited in the claims, the track includes a pair of parallel rails and the position sensing unit is arranged between the rails such that the train passes thereover.

In a further embodiment of the system or systems outlined above that is not currently recited in the claims, the position sensing unit includes a sensor mount elongated in the travel direction and the position sensors are mounted thereto.

In a further embodiment of the system or systems outlined above that is not recited in the claims, each of the plurality of car detection elements is a metal member extending under a respective one of the plurality of cars; and
wherein each of the position sensors is a proximity detector responsive to the presence and absence of each metal member.

In a further embodiment of the system or systems outlined above that is not recited in the claims, the system(s) further comprises a drive station arranged along the track and operable by the PLC to impart motion to the train.

In a further embodiment of the system or systems outlined above that is not recited in the claims, the drive station includes a pair of drive wheels on opposite sides of the track, the drive wheels engaging each of the plurality of cars when passing therebetween.

In a further embodiment of the system or systems outlined above that is not recited in the claims, the position sensing unit is located at the drive station.

In a further embodiment of the system or systems outlined above that is not recited in the claims, the system(s) further comprises:
a plurality of additional drive stations arranged along the track at intervals and operable by the PLC to impart motion to the train; and
a plurality of additional position sensing units identical to the position sensing unit, each of the plurality of additional position sensing units being located a respective one of the plurality of additional drive stations.

In a further embodiment of the system or systems outlined above that is not recited in the claims, the PLC is configured to sequentially operate the drive stations based on the input from the position sensing units.

In a further embodiment of the system or systems outlined above that is not recited in the claims, each of the plurality of cars has a substantially identical car length in the travel direction.

In yet another embodiment that is not recited in the claims, the present invention provides for a train system comprising:
a track extending in a travel direction;
a plurality of cars situated on the track and connected in a car order to form a train;
a plurality of data tags on the plurality of cars, each of the plurality of data tags storing a unique identifier;
a position sensing unit including:
   a data tag reader arranged along the track and operable to detect each of the plurality of data tags in sequence and read the unique identifiers therefrom; and
a programmable logic controller in signal communication with the position sensing unit, the programmable logic controller storing a list of the unique identifiers corresponding to the car order and being configured to determine a train position based on inputs from the position sensing unit and the stored list.

In a further embodiment of the system or systems outlined above that is not recited in the claims, the plurality of data tags are radio frequency identification (RFID) tags and the data tag reader is a RFID tag reader.

In a further embodiment of the system or systems outlined above that is not by the claimed invention, the RFID tags are passive RFID tags.

In a further embodiment of the system or systems outlined above that is not recited in the claims, the plurality of data tags are not located on outer surfaces of the plurality of cars.

In a further embodiment of the system or systems outlined above that is not recited in the claims, the system(s) further comprises a drive station arranged along the track and operable by the PLC to impart motion to the train.

In a further embodiment of the system or systems outlined above that is not recited in the claims, the PLC is configured to bring the train to a controlled stop if one of the unique identifiers is not read at its place in the car order.

In a further embodiment of the system or systems outlined above that is not recited in the claims, the position sensing unit is located at the drive station.

In a further embodiment of the system or systems outlined above that is not recited in the claims, the system(s) further comprises:
a plurality of additional drive stations arranged along the track at intervals and operable by the PLC to impart motion to the train; and
a plurality of additional position sensing units identical to the position sensing unit, each of the plurality of additional position sensing units being located a respective one of the plurality of additional drive stations.

In a further embodiment of the system or systems outlined above that is not recited in the claims, the PLC is configured to sequentially operate the drive stations based on the input from the position sensing units.

In a further embodiment of the system or systems outlined above that is not recited in the claims, the intervals are greater than the length of the train PLC calculates the expected speed of the train when reaching a subsequent drive station based on the location of the train, the topography and track conditions and starts the subsequent drive station to cause the subsequent drive station to impart force to the train such that it maintains substantially the same speed as when it first reached the subsequent drive station.

### BRIEF DESCRIPTION OF THE DRAWINGS

Various embodiments of the invention are described by way of example with reference to the accompanying drawings and appendices. The present invention will be apparent to those skilled in the art by reading the following detailed description of various embodiments thereof, with reference to the attached drawings, in which:
Figure 1 is a diagrammatical illustration of one rail system in keeping with the teachings of the present invention;
Figures 2 and 3 are side and top plan views, respectively, of one embodiment of a train operable with the system of Figure 1;
Figure 4 is a diagrammatical illustration of a track arrangement operable with a control system of the present invention;
Figure 5 is a schematic overview of a train system with position sensing units, according to a further embodiment of the present invention;
Figure 6 is a side view of a portion of the train system of Figure 5, with a train thereon shown in partial cutaway to reveal hidden components;
Figure 7 is a top view of a portion of the train system of Figure 5, including a drive station with the train of Figure 6 passing therethrough, with hidden components shown in broken lines;
Figure 8 is a top view of the drive station of Figure 7, with components removed and the train absent, showing an exemplary position sensing unit of Figure 5;
Figure 9 is a series of schematic side views of a train passing over one of the sensing units of Figure 5;
Figure 10 is a state diagram of states of the position sensing unit of Figure 9 as the train passes thereover; and
Figure 11 is a top view of a portion of the train system of Figure 5, including a drive station with the train of Figure 6 passing therethrough past an alternate position sensing unit embodiment, with hidden components shown in broken lines.

### DETAILED DESCRIPTION

The present invention will now be described more fully hereinafter with reference to the accompanying drawings and appendices, in which illustrative embodiments of the invention are shown. This invention may, however, be embodied in many different forms and should not be construed as limited to the embodiments and examples set forth herein nor should the invention be limited to the dimensions set forth herein. Rather, the embodiments herein presented are provided so that this disclosure will be thorough and complete, and will fully convey the scope of the invention to those skilled in the art by way of these illustrative and non-limiting embodiments and examples. It will be understood to the person of skill in the art that many different forms and variations of the embodiments, examples and illustrations provided herein may be possible, and the various embodiments, examples, and illustrations provided herein should be construed as non-limiting embodiments, examples, and illustrations.

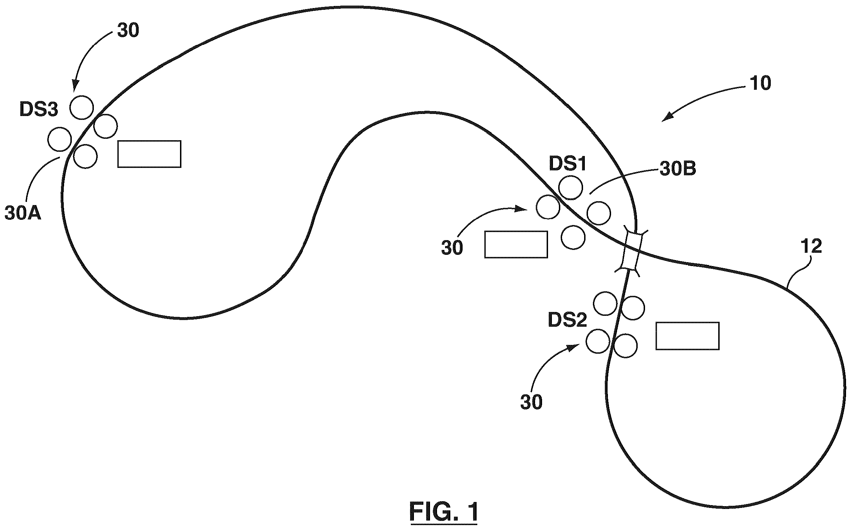

With reference initially to Figures 1-3, one train system 10, in keeping with the teachings of the present invention, comprises a track 12 having parallel rails 12a, 12b. A train 14 includes a first or lead car 16 having both forward and rear wheel pairs 18, 20 operable on the track 12 for providing a free wheeling movement to the lead car. For the embodiment herein described by way of example, the train includes additional cars described as a second or rear car 22 and an intermediate car 24 or multiple intermediate cars carried between the lead and rear cars. The rear and intermediate cars 22, 24 include a forward pivotal connection 26 for pivotally connecting the intermediate and rear cars to adjacent forward cars. The rear and intermediate cars 22, 24 have only rear wheel pairs 20 operable on the track 12 for providing a free wheeling movement thereto.

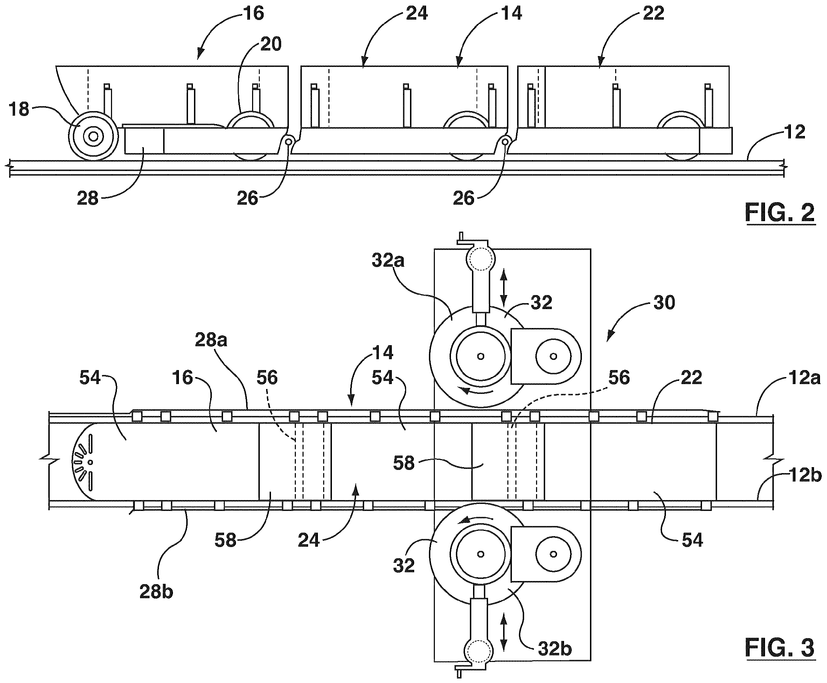

With continued reference to Figure 2, each of the cars has a side plate 28 affixed thereto. With reference to Figures 1, 3-4, multiple drive stations 30 each have a variable frequency drive (VFD) including a drive tire 32 for frictionally contacting the side plate 28 and imparting a driven movement to each car and thus the train 14. As illustrated with continued reference to Figure 3, the embodiment herein described includes each car having opposing side plates 28a, 28b and opposing drive tires 32a, 32b. Specifically, each car may have a fixed side plate on each side, which runs the length of the car and spaced outside the wheels and tracks. These side plates may be located symmetrically with the wheels and parallel to the light rails. In another arrangement, the side plates may be located asymmetrical with the wheels. However, in this arrangement, the wheels are part of the side plates such that the sideplate-wheel arrangement allows the train to be moved either downstream or upstream. Preferably, the wheels are placed to allow the train to operate in either an upright or an inverted position. Each drive stations 30 includes A/C inverters and a controller connected to every set of drive motors such that the motors may be synchronized through a modifying of at least one of voltage and frequency thereto. Forward or reverse motion of the train is the result of horizontal rotation of tires on opposite sides of the train turning in opposite directions with suitable pressure of said rotation that provides minimal slip between the tire surface and side plates. In other words, the two opposing tires are both pushed inward toward the center of the track. In order the stop the train, the drive tires 32 are further adapted to engage and apply pressure to the side plate 28 of the car.

As herein illustrated, the lead car 16 has a trough 54, and opposing side plates 28a, 28b having a reduced distance between them for smooth entrance into opposing drive tires 32a, 32b of the drive station. The rear car 22 has a trough and opposing side plates 28a, 28b at a reduced distance between them to reduce shock when the train 14 exits the opposing drive tires 32a, 32b of the drive station 30. The intermediate cars 24 coupled to the lead car 16 and the rear car 22 by the clevis type coupling has its trough aligned to produce an overall open trough with gaps 56 between cars. A flexible flap 58 extends over the gap 56 between the cars 16, 24, 22. The cars, each consist of a semicircle open trough and when joined or coupled together represents an open and continuous rigid trough for the entire length of the train. A flexible sealing flap attached near the front of the trailing car overlaps but is not attached to the rear of the lead car trough. A semi-circular trough is much better sealed with the flexible flap that other designs such as showed in U.S. Pat. No. 3,752,334. This allows the train to follow the terrain and curves without losing its sealed integrity as a continuous trough. The material to be transported in the train is effectively supported and sealed by this flap as the material weight is equally distributed maintaining the seal against the metal trough of the forward car. The long continuous trough provides for simplified loading as the train can be loaded and unloaded while moving similar to a conveyor belt. This is a significant advantage over the batch loading equipment requirements of a conventional railroad hopper or rotary dump car.

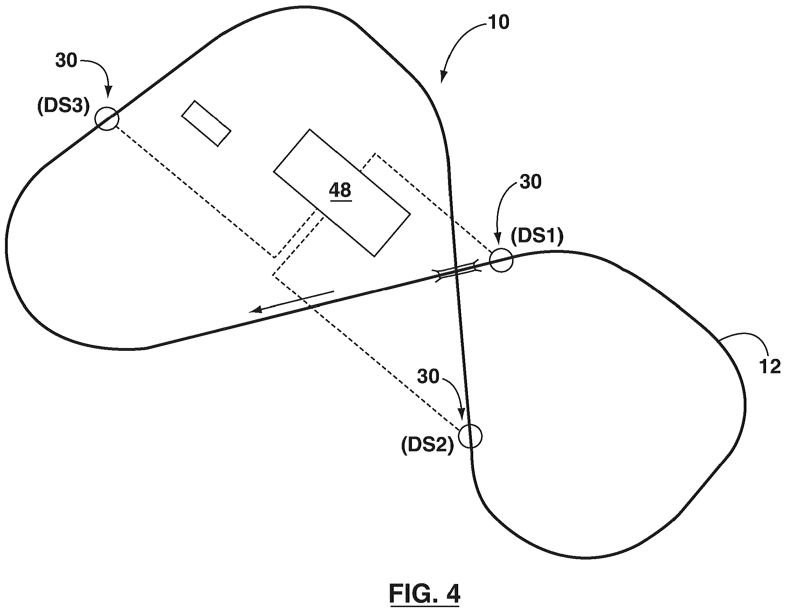

As set forth herein and with reference to Figure 4, a system and method of controlling the rail transport system is provided, which is focused on the train (rather than the drive stations) and is optimized to determine the location of the train along the track to at least within one car length. Referring back to Figures 1-4, drive stations 30 are spaced along the track 12 such that at least one drive station has contact with a train in order to maintain adequate control. A control center 48 may be remotely located from the drive stations 30 with each of the drive stations communicating with the control center for providing status information, such as train location, train speed, performance of the drive station itself, and the like. Communications from drive station to drive station and to the control center may employ hard wire, optical fiber, and/or radio wave transmissions as is desired for the conditions within which the system is to be operated. This system allows the use of multiple trains. For example, a plurality of trains may be operated within a system comprising multiple drive stations 30 in communication with each other for driving both trains and maintaining a desirable spacing between the trains. As will come to the mind of those skilled in the art, now having the benefit of the teachings of the present invention, alternate track and drive station configurations are anticipated including a reinversion location for reversing the direction of the train or trains traveling within the system.

With regard to operation of the drive control system, only the drive in contact with the train will preferably be running at any given point in time. The control system uses the trains' location information to make small adjustments in train speed to assure the proper spacing of all trains on the course. With regard to acceleration rate, incline grade and incline length will likely determine the peak horsepower required by the drive motors. Because the control system is capable of communicating drive speed information between drive stations for synchronization purposes, a train need not be fully accelerated before entering the next drive station. In addition, longer acceleration times allow the use of smaller horsepower (lower cost) drive motors.

With continued reference to Figure 4, a method of controlling the rail transport system comprising a train 14 and drive stations 30 is provided and may be optimized to determine the location of the train 14 along the track 12, optionally, to at least within one car length. Specifically, each of the drive stations 30 includes sensors, for example at least three sensors, spaced generally apart from one another so as to not interfere with each other. At least one of the cars, but ideally each of the cars, of the train 14 includes a corresponding car detection element (to be sensed by each of the sensors), such that when the train 14 passes through the drive station, each of the sensors may sense the corresponding car detection element of each car. The corresponding car detection element of the car may further be designed such that only one of the three sensors at the drive station 30 detects such car detection element at one time.

In one example, each of the drive stations 30 includes three sensors spaced generally horizontally apart from one another at a select sufficient length so as to not interfere with each other (e.g., Sensor A, Sensor B, and Sensor C generally spaced at least about 45,72 cm (18 inches) apart). Each of the cars of the train 14 includes a corresponding car detection element (to be sensed by each of the sensors) having an effective area such that only one of the three sensors at the drive station 30 detects such car detection element at one time. The sensors may be a proximity, ultra-sonic, magnetic proximity or other comparable or suitable sensor. In this example, the proximity or ultra-sonic type sensors would each be used to detect a select surface area on each car, whereas the magnetic proximity sensor would be used to detect a magnet (e.g., a neodymium magnet) mounted on each car. The car detection element can be an integral part of the car, or mounted onto the car.

Using the three sensors, the control system is adapted to determine the location of the train 14 along the track 12 to at least within one car length. Specifically, as each car of the train 14 passes through a drive station 30, each sensor sequentially detects the corresponding car detection element of a car and transmits an associated signal to the control system. In this way, presence or location of any one car of the train may be ascertained through this sensor arrangement at each of the drive stations.

This sensor arrangement may also be used to determine direction of movement by the train. For example, when a train is moving through a drive station in a forward direction, a corresponding car detection element on each car triggers sensor A, then sensor B and then sensor C, to send associated signals in sequence to a control center. When the control center receives the associated signals in this sequence (e.g., sensed A, sensed B, sensed C), the control center assumes that one car has passed through the drive station upstream (or in a forward motion). When a train is moving through a drive station in a reverse direction, a corresponding car detection element on each car triggers sensor C, then sensor B and then sensor A, to send associated signals in sequence to the control center. When the control center receives the associated signals in this reverse sequence (e.g., sensed C, sensed B, sensed A), the control center assumes that one car has passed through the drive station downstream (or in reverse). If the control center receives any other sequence than (sensed A, sensed B, sensed C) or (sensed C, sensed B, sensed A), stoppage of the train or a fault may be assumed.

The sensor arrangement may also be used to determine speed and acceleration of the train. For example, using (a) the distance between the corresponding car detection elements of two cars and (b) the length of time between the detection of sensors (e.g., (a) the distance between a magnet located on car 1 and a magnet located on car 2, and (b) the length of time between the detection of the magnet located on car 1 and the magnet of car 2 by sensor A), the speed of the train may be determined. Furthermore, sensor data over time or the sensing of multiple cars over time may be used to determine acceleration of the train.

As discussed above, the sensor arrangement may generally be used to detect a stoppage of the train or a fault. Derailments can be caused by a number of factors, for example from debris on the track to the failure of a wheel bearing on the train. In one specific example, the sensor arrangement may be used to detect derailment of the train. The detection of a folded train is generally performed by comparing the number of cars between drive stations. Specifically, the sensor arrangement may be used to sense the number of corresponding car detection elements on each car and, therefore, count cars that pass through a drive station. For example, if (a) drive stations D1 and D2 are 347,47 metres (1140 ft) apart and (b) each car is 20,42 metres (67 feet) in length each, there should be 17 cars between each drive station. If the difference of car count between each drive station is less than 17 cars or greater than 18 cars, then the control center assumes a possible derailment or a sensor failure. In turn, a signal can be sent to the drive station to stop the train.

In yet another embodiment, a control system is provided which can mitigate damage from derailment by ensuring that the speed of each drive tire at an approaching drive station (e.g., D2) is maintained at the same speed as the train. Specifically, an improved system and method is provided for controlling the movement of the train 14 along the track 12 based on the speed or acceleration detected at a preceding drive station. In one example, a first drive station 30 (DS1) moves the train along the track 12 at a preselected speed or acceleration toward a second drive station (DS2). The cars of the train are sensed by the sensor arrangement described above, and the position of the train 14 relative to the first drive station (DS1) and the second drive station (DS2) are ascertained. When the train 14 is determined to be within a certain distance from the second drive station (DS2), a command signal is transmitted to the second drive station (DS2), which initiates the drive tire 32 at the second drive station (DS2). In order to reduce wear of the drive tire and cars, the second drive station (DS2) engages and maintains the train at about the same speed and/or acceleration as at the first drive station speed. In other words, the second drive station (DS2) is initiated and maintained at the speed and/or acceleration rate assigned to the train by the control center. When select sensors at the second drive station (DS2) provide a determination that the second drive station (DS2) has engaged the train, a stop command is transmitted to the first drive station for the drive tire 32 of the first drive station to stop. In this fashion, the train will pass control from one drive station to another. The transition from one drive station to another is synchronized.

In various embodiments, the distance between neighbouring drive stations is larger than the length of the train. Therefore, the train runs free for a certain distance between drive stations. Therefore, the train is essentially passed off between drive stations. In this arrangement, the control system calculates the expected speed when the train reaches the second drive station based on the topography and track conditions (incline or decline of the track). The control system can then detect the location of the train, start the second drive station, and cause the second drive station to impart force from the drive tires to the train such that it maintains substantially the same speed as when it first reached the second drive station.

In various other embodiments, the distance between the drive stations is shorter than the train and therefore the train is generally always in contact with a drive station.

Many modifications and other embodiments of the inventions set forth herein will come to mind to one skilled in the art to which these inventions pertain having the benefit of the teachings presented in the foregoing descriptions and the associated drawings.

Therefore, it is to be understood that the inventions are not to be limited to the specific examples of the embodiments disclosed and that modifications and other embodiments are intended to be included within the scope of the appended claims. Although specific terms are employed herein, they are used in a generic and descriptive sense only and not for purposes of limitation.

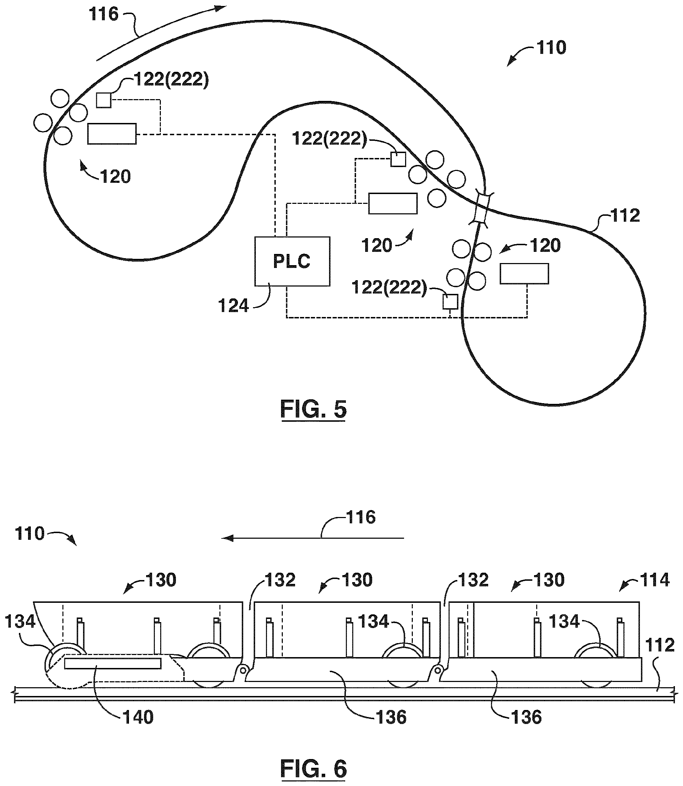

Referring to Figures 5 and 6, according to a further embodiment of the present invention a train system 110 includes a track 112 having one or more trains 114 riding thereon. The track 112 extends in a travel direction 116 and the trains 114 are driven in (forward) and counter to (reverse) the travel direction 116 by a plurality of drive stations 120. A plurality of position sensing units 122 each determines positions of the trains 114. A programmable logic controller (PLC) 124 is in signal communication with the drive stations 120 and position sensing units 122, and is configured to drive the train 114 with drive stations 120 based on the train positions determined by the position sensing units 122.

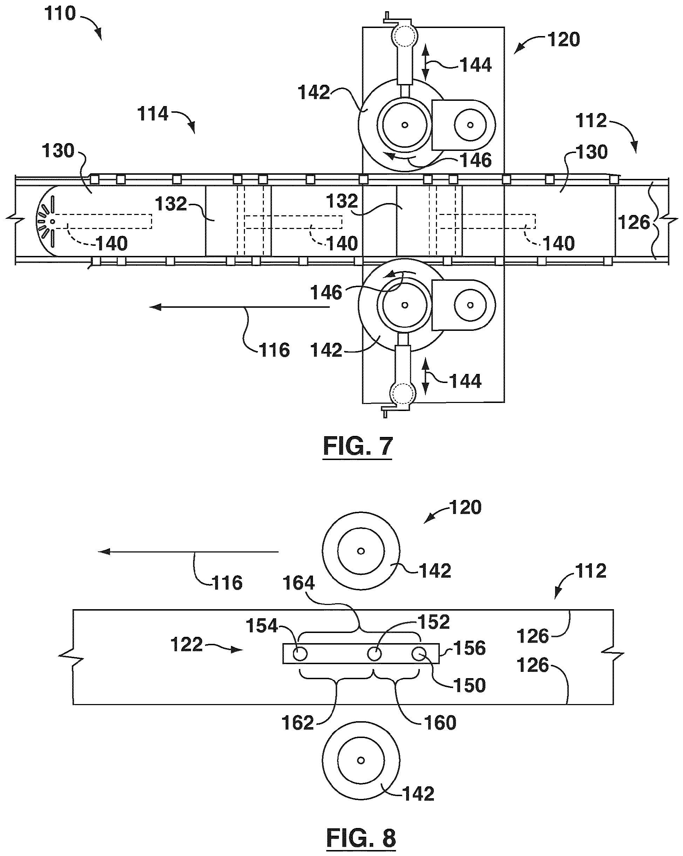

Referring also to Figure 7, the track 112 may include a pair of generally parallel rails 126, although other track 112 configurations may be employed. The track 112 can be arranged in a continuous loop or have discrete start and end points. Additionally, the track can have distinct branches, elevated sections, inverted sections, tunnels, etc. as needed or desired. It will be appreciated that the present invention may be employed with virtually any track configuration.

Referring to Figures 6 and 7, the train 114 includes a plurality of cars 130 connected sequentially. A car length of each car in the travel direction 116 is optionally approximately equal. Additionally, the cars 130 may roll in both right-side up and inverted positions on wheels 134 allowing for dumping of the contents of the car when in an inverted position. The cars 130 depicted include side plates 136 that are engaged by the drive stations 120 in order to impel the cars 130 in and against the travel direction 116, as will be explained in greater detail below. Although only three cars 130 are depicted for economy of illustration, trains composed of more or fewer cars may also be employed.

Each car 130 carries a car detection element 140 to the presence and absence of which the position sensing units 122 are responsive. As outlined above, the car detection element 140 can be an integral part of the car, or mounted onto the car. In the depicted embodiment, the car detection element 140 is a metal member elongated in the travel direction 116 and attached to the bottom of each car 130. In one embodiment, the length of the car detection element 140 in the travel direction is less than the car length. For example, the car detection element 140 can be an approximately 2,5 cm × 5,1 cm × 121,9 cm (1 inch × 2 inch × 4 foot) metal tube mounted to the bottom of an approximately 2,44 metres (8 foot) long car.

Referring to Figure 7, in the depicted embodiment, each drive station 120 includes a pair of drive wheels 142 mounted on opposite sides of the track 112. More or fewer drive wheels/pairs could be employed based on operational requirements, or another driving mechanism may be employed. The drive wheels 142 are laterally positioned in direction 144 so as to engage the side plates 136 on the on the cars 130. With the drive wheels 142 powered to spin in direction 146, the train 114 is thereby impelled forward in the travel direction 116. The train 114 can be impelled in reverse against the travel direction by turning the drive wheels 142 opposite direction 146. The drive wheels 142 can also be used to decelerate the train 114. The drive wheels 142 may be powered by one or more variable frequency (VFD) drives, as directed by the PLC 124.

Referring to Figure 8, an exemplary one of the position sensing units 122 includes a plurality of position sensors 150, 152, 154 arranged one after the other in the travel direction 116. The other units 122 may be substantially identical, but only one is illustrated for the sake of brevity. For ease of installation and replacement, the sensors 150, 152, 154 are commonly located on a sensor mount 156. The sensor mount 156 is arranged between the rails 126 of the track 112 such that the train 114 will pass thereover. In this arrangement, the sensors 150, 152, 154 are positioned such that each car detection element 140 passes within their nominal range; for example, the car detection elements 140 will pass approximately 1,9 cm (0,750 inches) over the position sensors 150, 152, 154.

In the depicted embodiment, the sensors 150, 152, 154 are proximity sensors, such as inductive proximity sensors, that are responsive to the presence and absence of the car detection elements 140 without making physical contact therewith. The sensors 150, 152, 154 may be highly unresponsive to nonmetallic objects, and to any objects outside of their nominal range. With no moving parts and largely immune to interference from dust and dirt, such sensors can function reliably with little or no maintenance in many harsh environments.

In various embodiments, there are at least two position sensors, and the depicted embodiment includes first, second and third sensors 150, 152, 154. The first and second position sensors 150, 152 are separated in the travel direction 116, by a first sensor spacing 160. The third sensor 154 is separated from the second sensor 152 in the travel direction 116 by a second sensor spacing 162. The first and third sensors 150, 154 are separated in the travel direction 116 by a third sensor spacing 164, which is equal to the sum of the first and second sensor spacings 160, 162. Although different numbers and spacings of sensors may be used, the following non-limiting spacing properties can be advantageous and form an illustrative embodiment of the invention:
- the first and second sensor spacings 160, 162 are each less than the detection element length;
- the first and second sensor spacings 160, 162 are not equal to each other;
- the third sensor spacing 164 is greater than the detection element length; and
- the third sensor spacing 164 is less than the car length; more particularly less than the spacing of detection elements from one car in the train to the next.

With the exemplary detection element length of approximately 1,22 metres (4 feet) and the car length of approximately 2,44 metres (8 feet) provided above, advantageous approximate measurements for the first, second and third sensor spacings are about 0.61 metres (2 feet), 0.91 metres (3 feet) and 1.52 metres (5 feet), respectively.

The PLC 124 is in signal communication with the drive units 120 and the position sensing units 122. Generally speaking, the PLC determines train position from the position sensing units 122 and controls the drive units 120 (for example, through one or more VFDs) based thereon. As used herein "signal communication" refers to communication effective to convey data. Various wired and/or wireless communications devices could be employed to effectuate signal communication between these components.

The determination of "train position," as used herein, refers broadly to the determination of the physical location of the train and/or derivatives thereof, such as train velocity and train acceleration/deceleration. The present invention is primarily focused on systems and methods for determining train position - the methods by which the PLC uses the determined train position to control trains can vary considerably within the scope of the present invention. However, the present invention, in one embodiment, may be used in support of a control routine like that in U.S. Patent No. 8,140,202, referenced above, where the PLC synchronizes drive wheel speeds between drive stations as a train passes from one drive station to the next.

A "PLC" should generally be understood to be a computer device equipped to receive sensor inputs and generate control outputs, and programmable with one or more control routines governing the operational relationship between the inputs and outputs. While the PLC may be a purpose-built PLC, such as are marketed for that purpose, the present invention is not necessarily limited thereto.

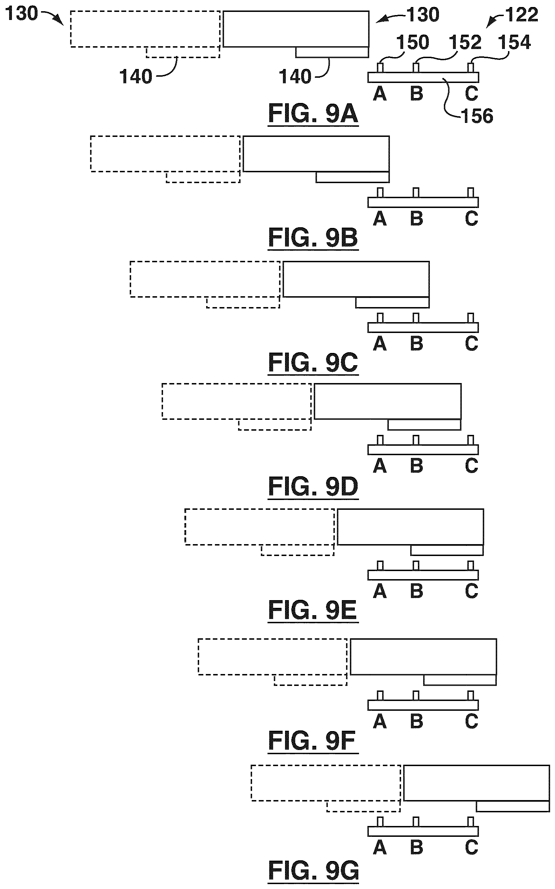

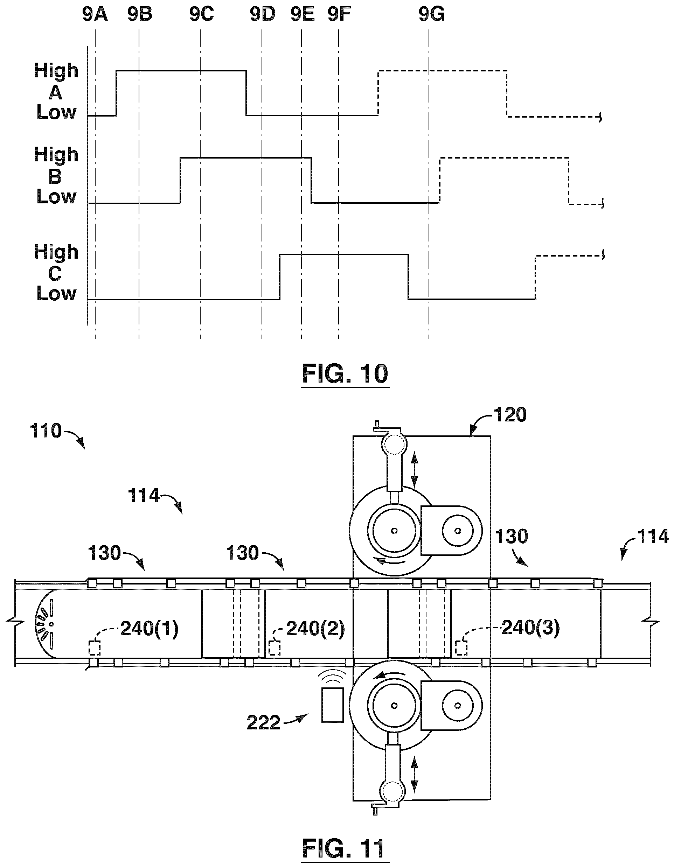

Referring to Figures 9 and 10, the operation of the position sensing unit 122 in determining train 114 position will be explained in greater detail. Figures 9A-9G schematically illustrate positions of a leading (solid lines) and trailing (broken lines) train cars 130 with detection elements 140, as they pass over the first, second and third position sensors 150, 152, 154 (labeled A, B and C).

Each of the position sensors has a high/on output, indicative of the presence of a detection element 140 and a low/off output, indicative of the absence of a detection element 140 (although these states could be reversed while preserving the overall functionality described herein). Figure 10 illustrates sensor response over time with the cars of Figure 9 passing thereover (a constant car velocity is used for this example). Sensor activations for the leading car are shown in solid lines, while switching to broken lines for activations by the trailing car. Labeled vertical lines 9A-9G in Figure 10 indicate sensor states at the car positions depicted in the corresponding Figures 9A-9G.

In Figure 9A, the leading car is still approaching sensor A, thus all of the sensors A, B and C are low. When the leading car reaches the Figure 9B position, the detection element is over sensor A, but has not yet reached sensor B, so only sensor A is high. At the Figure 9C position, the detection element is over both sensors A and B, so both sensors are high. At Figure 9D, the detection element has cleared sensor A but remains over sensor B, so sensor A goes low but B remains high - until the position of Figure 9F, when sensor B also goes low.

Without discussing sensor C for the moment, it will be appreciated that use of two sensors (A and B), spaced apart by less than the length of a detection element, offer a very reliable indicator that a car has passed over the sensors - without the need for extra debounce logic to rule out the possibility of intermittent false sensor responses. Before the PLC will count a car as having passed it will need to see the following events, in the following order (for the forward direction - the order would be reversed for a car passing in the opposite or reverse direction):
- Sensor A transition to high while Sensor B is low;
- Sensor B transition to high while Sensor A is high;
- Sensor A transition to low while Sensor B is high; and
- Sensor B transition to low while Sensor A is low.

The likelihood of this order of events occurring without a car actually passing over the sensors is extremely remote. Also, the identification of spurious sensor activations for error detection purposes is also relatively straightforward, and an appropriate warning or indication can be made by the PLC.

Including the third sensor (C) further reduces the likelihood of a spurious recognition - an example of a car count would further include:
- Sensor C transition to high while Sensor B is high (position of Figure 9E);
- Sensor B transition to low while Sensor C is high (and A is low, as noted above - position of Figure 9F); and
- Sensor C transition to low while B is low (position of Figure 9G).

Besides further minimizing the possibility of a spurious count, the addition of a third sensor is of significant value where a plurality of connected cars are to be sensed. At the position of Figure 9G, sensor A has transitioned to high for the trailing car, and it will be seen that this transition occurred after sensor B transitioned low but before sensor C did. Thus, the PLC can readily construe this as the beginning of the passage of the second car in the train, since there is sensor continuity (C to A) from the previous car.

While the spacing of two sensors could be adjusted to have sensor B remain high until the next car triggered sensor A, this result would potentially be ambiguous with a reversal of train direction that would re-trigger sensor A. In the depicted embodiment, the reversal possibility would be ruled out because sensor B would need to transition high again (and sensor C transition low) before a reversal could result in re-triggering sensor A. Also, a car count beginning with all sensors low clearly indicates the beginning of a train, while a car count ending with all sensors low clearly indicates the end of a train. The differing first and second sensor spacings 160, 162 further facilitate discrimination between different train-related events.

While the foregoing represents a robust method and system for reliably and accurately determining train position, the present invention is not necessarily limited thereto. For example, the position sensing unit 222 could be used alongside other position sensing components, such as those described in U.S. Patent No. 8,140,202. Also, other position sensing units 222 could be employed.

For example, referring to Figures 5 and 11, according to an alternate embodiment of the present invention of a positioning sensing unit 222, a data tag reader is used to detect and read a plurality of data tags 240 on the plurality of cars 130. Each of the data tags 240 stores a unique identifier (such as a car serial number), which is read by the position sensing unit 222. For each train 114 under its control, the PLC 124 stores a list of the unique identifiers corresponding to the order of the cars 130. Optionally, this list is inputted when the corresponding train 114 is placed in service.

By reading the identifiers, the PLC knows the position of every car in the train 114. This train position can be used to control the drive stations 120 substantially as described in connection with the foregoing embodiment. Additionally, if the position sensing unit 222 fails to read an identifier where and when expected, possibly corresponding to a missing or damaged data tag 240, the PLC 124 can be configured to bring the train 114 to a controlled stop until the problem is resolved. Also, the identifiers can indentify not only individual cars but classes or types of car. Thus, the PLC 124 can also intervene if identifiers corresponding to improper cars are detected in the system 110.

While this alternate embodiment is not necessarily limited to a particular type of data tag and reader, one embodiment uses radio frequency identification (RFID) tags for the data tags 240 and a corresponding RFID tag reader in the sensing unit 222. Each of the RFID tags 240 would electronically store the identifier and transmit it to the reader 222 when within range. RFID tags have the advantage of not needing to be located on an outer surface of the cars 130, and are thus more impervious to dislodgment or other damage. Most advantageously, the RFID tags 240 are passive, and are thus powered by the signal received from the sensing unit 222 and transmit their identifier in response. Thus, a separate power source for the tags 240 is not necessary and they can remain in place for an extended period without battery replacement or other maintenance. However, active RFID tags could alternately be employed.

The foregoing examples are provided for illustrative and exemplary purposes; the present invention is not necessarily limited thereto. Rather, those skilled in the art will be appreciate that the variation modifications, as well as adaptations for particular circumstances, will fall within the scope of the invention herein shown and described, and of the claims appended hereto.

## Claims

1. A control system for a rail transport system (10) for conveying bulk materials,
wherein the rail transport system (10) includes a plurality of cars (16, 22, 24) adapted to form at least two separate trains (14), and wherein at least one car of the train (14) has a pair of side drive plates (28) and is adapted for carrying the bulk materials, the rail transport system (10) further including at least one drive station (30, D1) for frictionally contacting the side drive plates (28) for imparting a driven movement to each train (14), the control system comprising:
a multiple sensor arrangement comprising at least three sensors (150, 152, 154), with a known pre-determined spacing between each sensor permitting sequential detection of a car detection element (140) of at least one car of each of the trains as the car passes by, wherein the pre-determined spacing between a first sensor (150) and a second sensor (152) of the multiple sensor arrangement is less than the pre-determined spacing between the second sensor (152) and a third sensor (154) of the multiple sensor arrangement, for sensing the car detection element (140) of at least one car of each of the trains,
wherein the multiple sensor arrangement is adapted to determine status information associated with the at least one car wherein the status information is at least one of the speed of the car, speed of the train associated with the car, acceleration rate of the car, acceleration rate of the train associated with the car, direction of movement of the car, derailment of the car, location of the car, location of the train, or derailment of the train associated with the car.

2. The control system of claim 1, wherein the multiple sensor arrangement comprises a magnetic proximity sensor.

3. The control system of claim 1, wherein the multiple sensor arrangement is a three sensor arrangement.

4. The control system of claim 3, wherein the three sensor arrangement can be implemented to sequentially detect the car detection element (140) of at least one car (16, 22, 24) of the train (14).

5. A rail transport system (10) for conveying bulk materials, including:
a plurality of cars (14, 22, 24) adapted to form at least two separate trains (14), at least one car having a pair of side drive plates (28) and adapted for carrying the bulk materials, a car detection element (140) associated to at least one of the cars,
a drive station (30, D1) for frictionally contacting the side drive plates (28) of at least one of the cars for imparting a driven movement to each contacted car, and
a control system according to any one of claims 1 to 4.

6. The rail transport system (10) of claim 5, further comprising a second drive station (D2) for frictionally contacting the side drive plates (28) of at least some of the cars for imparting a driven movement to each contacted car,
wherein the multiple sensor arrangement is operable to determine a position of the train relative to the second drive station (D2) and initiate the second drive station (D2) such that driven movement can be imparted to the train (14) at the second drive station (D2) to maintain substantially the same speed of the train (14) as when the train (14) was at the first drive station (D1).

7. The rail transport system (10) of claim 5 or 6, wherein the drive station (30, D1) includes a drive unit (120) and a drive tire arrangement (32) for frictionally contacting the side drive plates (28) of at least one of the cars, and wherein the drive unit (120) is adapted to control the drive tire arrangement (32) in response to the determined status of one of the cars.

8. The rail transport system (10) of claim 7, wherein the drive unit (120) is adapted to control the drive tire arrangement (32) to increase driven movement from the drive tire arrangement (32) to a car engaged thereto in response to the determined status information.

9. The rail transport system (10) of claim 7, wherein the drive unit (120) is adapted to control the drive tire arrangement (32) to decrease driven movement from the drive tire arrangement (32) to a car engaged thereto in response to the determined status information.

10. The rail transport system (10) of any one of claims 5 to 9, wherein the car detection element 140 has an effective area such that only one of the sensors (150, 152, 154) detects the car detection element (140) at one time.

11. The rail transport system (10) of any one of claims 5 to 10, wherein as each car passes near the drive station (30, D1, D2), each sensor (150, 152, 154) sequentially detects the car detection element (140) of the car.

12. The rail transport system (10) of any one of claims 5-11, wherein the car detection element (140) is a metal member elongated in a travel direction of the car.

## Patentansprüche

1. Steuersystem für ein Schienentransportsystem (10) zum Befördern von Schüttgut,
wobei das Schienentransportsystem (10) eine Vielzahl von Wagen (16, 22, 24) beinhaltet, die angepasst sind, um mindestens zwei getrennte Züge (14) zu bilden, und wobei mindestens ein Wagen des Zugs (14) ein Paar seitlicher Antriebsplatten (28) aufweist und angepasst ist, um das Schüttgut zu tragen, wobei das Schienentransportsystem (10) ferner mindestens eine Antriebsstation (30, D1) zur reibschlüssigen Berührung der seitlichen Antriebsplatten (28) beinhaltet, um jedem Zug (14) eine Antriebsbewegung zu verleihen, das Steuersystem umfassend:
eine Mehrfachsensoranordnung, umfassend mindestens drei Sensoren (150, 152, 154), wobei ein bekannter vorbestimmter Abstand zwischen jedem Sensor eine sequentielle Erfassung eines Wagenerfassungselements (140) von mindestens einem Wagen von jedem der Züge ermöglicht, wenn der Wagen vorbeifährt, wobei der vorbestimmte Abstand zwischen einem ersten Sensor (150) und einem zweiten Sensor (152) der Mehrfachsensoranordnung kleiner ist als der vorbestimmte Abstand zwischen dem zweiten Sensor (152) und einem dritten Sensor (154) der Mehrfachsensoranordnung, um das Wagenerfassungselement (140) von mindestens einem Wagen von jedem der Züge zu erfassen,
wobei die Mehrfachsensoranordnung angepasst ist, um Zustandsinformationen zu bestimmen, die mit dem mindestens einen Wagen assoziiert sind, wobei die Zustandsinformationen mindestens eines von der Geschwindigkeit des Wagens, der Geschwindigkeit des mit dem Wagen assoziierten Zugs, der Beschleunigungsrate des Wagens, der Beschleunigungsrate des mit dem Wagen assoziierten Zugs, der Bewegungsrichtung des Wagens, dem Entgleisen des Wagens, dem Standort des Wagens, dem Standort des Zugs oder dem Entgleisen des mit dem Wagen assoziierten Zugs sind.

2. Steuersystem nach Anspruch 1, wobei die Mehrfachsensoranordnung einen magnetischen Näherungssensor umfasst.

3. Steuersystem nach Anspruch 1, wobei die Mehrfachsensoranordnung eine Drei-Sensoranordnung ist.

4. Steuersystem nach Anspruch 3, wobei die Drei-Sensoranordnung implementiert sein kann, um nacheinander das Wagenerfassungselement (140) von mindestens einem Wagen (16, 22, 24) des Zugs (14) zu erfassen.

5. Schienentransportsystem (10) zum Befördern von Schüttgut, das Folgendes beinhaltet:
eine Vielzahl von Wagen (14, 22, 24), die angepasst sind, um mindestens zwei getrennte Züge (14) zu bilden, wobei mindestens ein Wagen ein Paar von seitlichen Antriebsplatten (28) aufweist und angepasst ist, um das Schüttgut zu tragen, ein Wagenerfassungselement (140), das mit mindestens einem der Wagen assoziiert ist,
eine Antriebsstation (30, D1) zur reibschlüssigen Berührung der seitlichen Antriebsplatten (28) mindestens eines der Wagen, um jedem berührten Wagen eine Antriebsbewegung zu verleihen, und
ein Steuersystem nach einem der Ansprüche 1 bis 4.

6. Schienentransportsystem (10) nach Anspruch 5, ferner umfassend eine zweite Antriebsstation (D2) zur reibschlüssigen Berührung der seitlichen Antriebsplatten (28) von mindestens einigen der Wagen, um jedem berührten Wagen eine Antriebsbewegung zu verleihen,
wobei die Mehrfachsensoranordnung betrieben werden kann, um eine Position des Zugs in Bezug auf die zweite Antriebsstation (D2) zu bestimmen und die zweite Antriebsstation (D2) zu initiieren, sodass dem Zug (14) an der zweiten Antriebsstation (D2) eine Antriebsbewegung verliehen werden kann, um im Wesentlichen die gleiche Geschwindigkeit des Zugs (14) beizubehalten, wie wenn der Zug (14) an der ersten Antriebsstation (D1) war.

7. Schienentransportsystem (10) nach Anspruch 5 oder 6, wobei die Antriebsstation (30, D1) eine Antriebseinheit (120) und eine Antriebsreifenanordnung (32) zur reibschlüssigen Berührung der seitlichen Antriebsplatten (28) mindestens eines der Wagen beinhaltet, und wobei die Antriebseinheit (120) angepasst ist, um die Antriebsreifenanordnung (32) abhängig von dem bestimmten Zustand eines der Wagen zu steuern.

8. Schienentransportsystem (10) nach Anspruch 7, wobei die Antriebseinheit (120) angepasst ist, um die Antriebsreifenanordnung (32) zu steuern, um die Antriebsbewegung von der Antriebsreifenanordnung (32) zu einem damit assoziierten Wagen als Reaktion auf die bestimmten Zustandsinformationen zu erhöhen.

9. Schienentransportsystem (10) nach Anspruch 7, wobei die Antriebseinheit (120) angepasst ist, um die Antriebsreifenanordnung (32) zu steuern, um die Antriebsbewegung von der Antriebsreifenanordnung (32) zu einem damit assoziierten Wagen als Reaktion auf die bestimmten Zustandsinformationen zu verringern.

10. Schienentransportsystem (10) nach einem der Ansprüche 5 bis 9, wobei das Wagenerfassungselement 140 einen Wirkungsbereich aufweist, sodass nur einer der Sensoren (150, 152, 154) das Wagenerfassungselement (140) zu einem Zeitpunkt erkennt.

11. Schienentransportsystem (10) nach einem der Ansprüche 5 bis 10, wobei jeder Sensor (150, 152, 154) beim Vorbeifahren von jedem Wagens an der Antriebsstation (30, D1, D2) nacheinander das Wagenerfassungselement (140) des Wagens erfasst.

12. Schienentransportsystem (10) nach einem der Ansprüche 5-11, wobei das Wagenerfassungselement (140) ein in Fahrtrichtung des Wagens längliches Metallelement ist.

## Revendications

1. Système de commande pour un système de transport ferroviaire (10) pour le convoyage de matériaux en vrac,
dans lequel le système de transport ferroviaire (10) comprend une pluralité de wagons (16, 22, 24) adaptés pour former au moins deux trains séparés (14), et dans lequel au moins un wagon du train (14) a une paire de plaques d'entraînement latérales (28) et est adapté pour transporter les matériaux en vrac, le système de transport ferroviaire (10) comprenant en outre au moins un poste d'entraînement (30, D1) destiné à venir en contact par friction avec les plaques d'entraînement latérales (28) pour communiquer un mouvement entraîné à chaque train (14), le système de commande comprenant :
un agencement à capteurs multiples comprenant au moins trois capteurs (150, 152, 154), avec un espacement prédéterminé connu entre chaque capteur permettant une détection séquentielle d'un élément de détection de wagon (140) d'au moins un wagon de chacun des trains lors du passage du wagon, dans lequel l'espacement prédéterminé entre un premier capteur (150) et un deuxième capteur (152) de l'agencement à capteurs multiples est inférieur à l'espacement prédéterminé entre le deuxième capteur (152) et un troisième capteur (154) de l'agencement à capteurs multiples, pour détecter l'élément de détection de wagon (140) d'au moins un wagon de chacun des trains,
dans lequel l'agencement à capteurs multiples est adapté pour déterminer des informations d'état associées à l'au moins un wagon, dans lequel les informations d'état sont au moins l'une parmi la vitesse du wagon, la vitesse du train associé au wagon, le taux d'accélération du wagon, le taux d'accélération du train associé au wagon, le sens de déplacement du wagon, le déraillement du wagon, l'emplacement du wagon, l'emplacement du train ou le déraillement du train associé au wagon.

2. Système de commande selon la revendication 1, dans lequel l'agencement à capteurs multiples comprend un capteur de proximité magnétique.

3. Système de commande selon la revendication 1, dans lequel l'agencement à capteurs multiples est un agencement à trois capteurs.

4. Système de commande selon la revendication 3, dans lequel l'agencement à trois capteurs peut être mis en oeuvre pour détecter séquentiellement l'élément de détection de wagon (140) d'au moins un wagon (16, 22, 24) du train (14).

5. Système de transport ferroviaire (10) pour convoyer des matériaux en vrac, comprenant :
une pluralité de wagons (14, 22, 24) adaptés pour former au moins deux trains séparés (14), au moins un wagon ayant une paire de plaques d'entraînement latérales (28) et adapté pour transporter les matériaux en vrac, un élément de détection de wagon (140) associé à au moins l'un des wagons,
un poste d'entraînement (30, D1) destiné à venir en contact par friction avec les plaques d'entraînement latérales (28) d'au moins l'un des wagons pour communiquer un mouvement entraîné à chaque wagon mis en contact, et
un système de commande selon l'une quelconque des revendications 1 à 4.

6. Système de transport ferroviaire (10) selon la revendication 5, comprenant en outre un deuxième poste d'entraînement (D2) destiné à venir en contact par friction avec les plaques d'entraînement latérales (28) d'au moins certains des wagons pour communiquer un mouvement entraîné à chaque wagon mis en contact,
dans lequel l'agencement à capteurs multiples est utilisable pour déterminer une position du train par rapport au deuxième poste d'entraînement (D2) et initier le deuxième poste d'entraînement (D2) de sorte qu'un mouvement entraîné puisse être communiqué au train (14) au niveau du deuxième poste d'entraînement (D2) pour maintenir sensiblement la même vitesse du train (14) que lorsque le train (14) se trouvait au premier poste d'entraînement (D1).

7. Système de transport ferroviaire (10) selon la revendication 5 ou 6, dans lequel le poste d'entraînement (30, DI) comprend une unité d'entraînement (120) et un agencement de pneu d'entraînement (32) pour venir en contact par friction avec les plaques d'entraînement latérales (28) d'au moins l'un des wagons, et dans lequel l'unité d'entraînement (120) est adaptée pour commander l'agencement de pneu d'entraînement (32) en réponse à l'état déterminé de l'un des wagons.

8. Système de transport ferroviaire (10) selon la revendication 7, dans lequel l'unité d'entraînement (120) est adaptée pour commander à l'agencement de pneu d'entraînement (32) d'augmenter le mouvement entraîné de l'agencement de pneu d'entraînement (32) à un wagon engagé sur celui-ci en réponse aux informations d'état déterminées.

9. Système de transport ferroviaire (10) selon la revendication 7, dans lequel l'unité d'entraînement (120) est adaptée pour commander à l'agencement de pneu d'entraînement (32) de diminuer le mouvement entraîné de l'agencement de pneu d'entraînement (32) à un wagon engagé sur celui-ci en réponse aux informations d'état déterminées.

10. Système de transport ferroviaire (10) selon l'une quelconque des revendications 5 à 9, dans lequel l'élément de détection de wagon 140 a une zone efficace telle que seul l'un des capteurs (150, 152, 154) détecte l'élément de détection de wagon (140) à un moment donné.

11. Système de transport ferroviaire (10) selon l'une quelconque des revendications 5 à 10, dans lequel lorsque chaque wagon passe à proximité du poste d'entraînement (30, D1, D2), chaque capteur (150, 152, 154) détecte séquentiellement l'élément de détection de wagon (140) du wagon.

12. Système de transport ferroviaire (10) selon l'une quelconque des revendications 5 à 11, dans lequel l'élément de détection de wagon (140) est un élément métallique allongé dans une direction de déplacement du wagon.
